# EUROPÄISCHE PATENTSCHRIFT

(11) **EP 2 907 616 B1**
(45) Veröffentlichungstag und Bekanntmachung des Hinweises auf die Patenterteilung: **01.06.2016**
(21) Anmeldenummer: 14194239.1
(22) Anmeldetag: 21.11.2014
(51) Int. Cl.: B23P 19/04, F16B 19/10, F16B 21/16, B23P 13/00

(54) **Verfahren zur Fertigung eines Kugelsperrbolzens und zugehörige Montagevorrichtung**
Method for producing a ball lock pin and corresponding assembling device
Procédé de fabrication d'un boulon de blocage à rotule et dispositif de montage associé

(30) Priorität: 12.02.2014 DE 102014202514
(43) Veröffentlichungstag der Anmeldung: 19.08.2015
(73) Patentinhaber: Kipp Verpachtungen e.K., 72172 Sulz a.N. (DE)
(72) Erfinder: Müller, Boris, 72348 Rosenfeld (DE); Haug, Steffen, 72172 Sulz (DE)
(74) Vertreter: Kohler Schmid Möbus Patentanwälte

(56) Entgegenhaltungen:
- WO-A2-2008/027565
- CH-A5- 686 292
- DE-A1- 19 723 425
- KR-B1- 100 775 906
- US-B1- 6 386 789

## Beschreibung

Die Erfindung betrifft ein Verfahren zur Fertigung eines Kugelsperrbolzens, wobei der Kugelsperrbolzen ein Hülsenbauteil mit einer axialen Führungsaufnahme umfasst, in welcher ein Stößel verschieblich gelagert ist, und wobei das Hülsenbauteil eine quer zur Führungsaufnahme verlaufende Bohrung aufweist, in der wenigstens eine Sperrkugel angeordnet ist, wobei die wenigstens eine Sperrkugel in einer verriegelten Stellung des Stößels nach außen in Richtung einer Verengung am äußeren Ende der Bohrung gedrückt ist, so dass die Sperrkugel aus der Verengung herausragt, und in einer entriegelten Stellung die wenigstens eine Sperrkugel in einen dünnen Abschnitt, insbesondere eine umlaufende Ausnehmung, am Stößel zurückfallen kann, so dass die Sperrkugel nicht aus der Verengung herausragt.

Ein solches Verfahren ist aus der US 6 386 789 bekannt. Diese Schrift offenbart ebenfalls eine Montage-Vorrictung zur Montage eines Kugelsperrbolzens.

Ein solcher Kugelsperrbolzen ist beispielsweise aus der EP 1 707 826 A2 bekannt geworden.

Kugelsperrbolzen werden dazu eingesetzt, um bei Maschinen und Geräten verschiedenster Art Bauteile an Strukturen auf einfache Weise reversibel und beschädigungsfrei zu befestigen und wieder zu lösen.

Typischerweise ist an einem Griffstück ein Hülsenbauteil (meist ein Stahlrohr) befestigt; an dessen dem Griffstück abgewandten Ende zwei Sperrkugeln in einer quer verlaufenden Bohrung angeordnet sind; die Bohrung weist beidenends eine Verengung auf, die die Sperrkugeln nicht passieren können. In einer verriegelten Stellung werden die Sperrkugeln radial aus dem Hülsenbauteil heraus gedrückt und können dadurch ein Bauteil oder eine Struktur hintergreifen. In einer entriegelten Stellung können die Sperrkugeln in die Bohrung zurückfallen, so dass der Hintergriff aufgehoben wird.

Das Ver- und Entriegeln erfolgt in der Regel mittels eines Betätigungsknopfs im Griffstück, der mit einem Stößel verbunden ist, der in einer axialen Führungsaufnahme im Hülsenbauteil axial verschiebbar ist. Wenn eine Nut im Stößel an der axialen Position der Sperrkugeln ist, so dass diese in die Nut zurückgedrückt werden können, ist der Kugelsperrbolzen entriegelt. Wenn ein Stößelabschnitt mit größerem Durchmesser als die Nut an der axialen Position der Sperrkugeln ist, werden die Kugeln nach außen gedrückt, was einer verriegelten Stellung des Kugelsperrbolzens entspricht. Der Kugelsperrbolzen wird durch eine Feder meist in die verriegelte Stellung vorgespannt, und kann durch Eindrücken des Betätigungsknopfes entriegelt werden.

Bei der Fertigung eines solchen Kugelsperrbolzens stellt die Montage der Sperrkugeln eine erhebliche Schwierigkeit dar. Üblicherweise wird das Hülsenbauteil mit einer quer zur Führungsaufnahme verlaufenden Bohrung versehen, deren Durchmesser größer ist als der Durchmesser der Sperrkugeln. Sodann wird der Stößel in das Hülsenbauteil eingeführt und die Nut des Stößels auf die axiale Position der Bohrung gebracht (entriegelte Stellung). Anschließend werden die Sperrkugeln radial von außen in die Bohrung eingeführt, und die radialen Enden der Bohrung werden jeweils mit einem Prägestempel eingedrückt. Durch diese plastische Verformung des Hülsenbauteils im Bereich der beiden Enden der Bohrung werden Verengungen geschaffen, durch die die Sperrkugeln unverlierbar in der Bohrung gehalten werden.

Um die Verengungen zuverlässig zu fertigen ist es notwendig, das Hülsenbauteil für den Prägeprozess sehr exakt zu positionieren. Die Genauigkeit der Positionierung ist dabei auch von der Genauigkeit der Fertigung des Hülsenbauteils, insbesondere des Durchmessers und der Rundheit des Hülsenbauteils, abhängig. In der Regel ist es notwendig; das Hülsenbauteil außen einer Feinbearbeitung, etwa einem Schleifen, zu unterziehen, um eine für die Positionierung beim Prägen ausreichende `Fertigungsgenauigkeit des Hülsenbauteils zu erreichen. Dieser Aufwand verteuert den Kugelsperrbolzen erheblich.

Hinzu tritt, dass auch bei guter Fertigungsgenauigkeit des Hülsenbauteils der Prägeprozess nur eine vergleichsweise geringe Kontrolle über den Prozess der Materialverformung gestattet und eine entsprechend geringe Zuverlässigkeit aufweist. So kann die Höhe des Überstands einer Sperrkugel in der verriegelten Stellung aus dem Hülsenbauteil heraus nur näherungsweise eingestellt werden. Auch unterliegt die anzuwendende Kraft, bei der eine Sperrkugel eine Verengung aufbrechen und aus der Bohrung herausgedrückt werden kann, erheblichen Schwankungen. Schließlich können nach dem Prägeprozess auch Kantenteile von einer Verengung relativ leicht abbrechen.

### Aufgabe der Erfindung

Der Erfindung liegt die Aufgabe zugrunde, ein Verfahren zur Fertigung eines Kugelsperrbolzens bereitzustellen, mit dem auf kostengünstige Weise eine Sperrkugel hinter einer präzise ausgebildeten Verengung montiert werden kann.

### Kurze Beschreibung der Erfindung

Diese Aufgabe wird gelöst durch ein Verfahren der eingangs vorgestellten Art, wobei das Verfahren folgende Schritte aufweist:
a) ein Hülsenbauteil wird mit einer quer zu seiner Führungsaufnahme verlaufenden Bohrung versehen, die zumindest bis zur Führungsaufnahme reicht, wobei der Durchmesser der Bohrung kleiner ist als der Durchmesser der wenigstens einen Sperrkugel;
b) die Bohrung wird in einem inneren Teilabschnitt durch Materialabtrag auf einen Durchmesser größer als der Durchmesser der wenigstens einen Sperrkugel geweitet, wobei eine Verengung an wenigstens einem äußeren Ende der Bohrung verbleibt;
c) die wenigstens eine Sperrkugel wird in die Bohrung eingeführt, insbesondere durch die Führungsaufnahme, und durch Anlegen eines Unterdrucks an der wenigstens einen Verengung relativ zur Führungsaufnahme wird die wenigstens eine Sperrkugel gegen die Verengung gezogen;
d) ein Stößel wird in die Führungsaufnahme eingeführt, während die wenigstens eine Sperrkugel durch den Unterdruck gegen die Verengung gezogen wird.

Die Erfindung schlägt eine Montage der Sperrkugeln und allgemein eine Fertigung des Kugelsperrbolzens vor, bei der die Verengung am radialen Ende der querverlaufenden Bohrung im Hülsenbauteil dadurch erhalten wird, dass die Bohrung mit einem kleineren Durchmesser gefertigt wird als der Durchmesser der Sperrkugel beträgt. Man beachte, dass es hierfür genügt, dass in einer beliebigen Richtung der Durchmesser der Bohrung (senkrecht zu ihrer Erstreckungsrichtung) kleiner ist als der Durchmesser einer Sperrkugel. Die Bohrung wird anschließend geweitet, etwa durch Ausfräsen oder Ausdrehen, so dass eine Sperrkugel in der Bohrung aufgenommen werden kann. Jedoch wird am äußeren Ende der Bohrung, also an der Außenseite des Hülsenbauteils, genügend Material stehen gelassen, so dass die Sperrkugel immer noch in der Bohrung gehalten ist, also der Durchmesser der Verengung kleiner ist als der Durchmesser der Kugel. Man beachte, dass es hierfür wiederum genügt, dass in einer beliebigen Richtung der Durchmesser der Verengung (senkrecht zur Erstreckungsrichtung der Bohrung) kleiner ist als der Durchmesser der Sperrkugel.

Die Begrenzung der Verengung wird also aus dem Vollmaterial des Hülsenbauteils erhalten, indem Vollmaterial nach dem Materialabtrag beim Bohren in Schritt a) und nach dem Materialabtrag bei der Weitung der Bohrung (etwa durch Fräsen) in Schritt b) übrig bleibt. Dieses stehen gelassene Material weist (zumindest im Wesentlichen) das Gefüge des Vollmaterials auf, und hat dementsprechend gut einstellbare Materialeigenschaften.

Der Materialabtrag beim Weiten der Bohrung, insbesondere Fräsen der Bohrung, ist gut zu kontrollieren, so dass die Verengung sehr genau gefertigt werden kann, unabhängig von der Fertigungsgenauigkeit des Hülsenbauteils bezüglich Durchmesser und Rundheit. Ein Schleifen der äußeren Oberfläche des Hülsenbauteils ist unnötig und kann entfallen. Durch das erfindungsgemäße Verfahren können auch Verengungsgeometrien gefertigt werden, die durch Prägen nicht erreichbar sind, insbesondere solche, die eine besonders hohe Festigkeit aufweisen, etwa indem ein besonders dickwandiger Übergriff der Verengung über die Sperrkugel eingerichtet wird. Abbrechende Kantenteile können durch geeignete Materialdicke und Kantengestalt leicht vermieden werden.

Die Sperrkugel wird nach dem Weiten der Bohrung in der Bohrung platziert, typischerweise durch Einführen durch die Führungsaufnahme (alternativ ist es auch denkbar, durch ein Ende der Bohrung ohne Verengung, für das keine Sperrkugel vorgesehen ist, eine Sperrkugel einzuführen).

Um die Sperrkugel für das Einführen des Stößels nach außen zu ziehen, wird gemäß der Erfindung ein relatives Vakuum (also ein geringerer Luftdruck außen an der Verengung im Vergleich zur Führungsaufnahme) eingesetzt. Typischerweise wird dafür außen an der Verengung gesaugt; alternativ ist auch das Einblasen von Druckluft von der Führungsaufnahme her möglich. Dadurch wird die Sperrkugel gegen die Innenseite der Verengung gezwungen, so dass die Führungsaufnahme für das Einführen des Stößels freigeräumt ist. Dieses Vorgehen ist sehr einfach möglich, ohne dass die Sperrkugel ergriffen oder sonst kontaktiert werden muss. Die Sperrkugel wird keiner Gefahr des Verkratzens oder einer sonstigen Beschädigung ausgesetzt, und die Haltekraft auf die Sperrkugel kann leicht zu- und abgeschaltet werden.

Nach dem Einführen des Stößels wird das relative Vakuum abgeschaltet. Die Sperrkugel ist dann zwischen Verengung und Stößel im Kugelsperrbolzen gehalten und grundsätzlich einsatzbereit. Typischerweise werden aber anschließend noch weitere Teile des Kugelsperrbolzens montiert, typischerweise ein Griffteil, ein Bedienknopf und eine Feder, um den Kugelsperrbolzen in eine Stellung (meist die verriegelte Stellung) vorzuspannen.

### Bevorzugte Varianten der Erfindung

Besonders bevorzugt ist eine Variante des erfindungsgemäßen Verfahrens, die vorsieht,
dass in Schritt a) das Hülsenbauteil mit einer durchgehenden Bohrung versehen wird,
dass in Schritt b) jeweils eine Verengung an den beiden einander gegenüberliegenden, äußeren Enden der Bohrung verbleibt,
dass in Schritt c) zwei Sperrkugeln in die Bohrung eingeführt werden, und durch Anlegen des Unterdrucks an beiden Verengungen jeweils eine Sperrkugel gegen eine der Verengungen gezogen wird,
und dass in Schritt d) der Stößel in die Führungsaufnahme eingeführt wird, während die beiden Sperrkugeln durch den Unterdruck jeweils gegen eine der Verengungen gezogen werden. Gemäß dieser Variante werden zwei Sperrkugeln an den gegenüberliegenden Enden der quer zur axialen Führungsaufnahme verlaufenden Bohrung hinter Verengungen montiert. Mit den beiden Sperrkugeln kann dann ein zweifacher, symmetrischer Hintergriff an einem Bauteil oder einer Struktur erfolgen, wenn der Kugelsperrbolzen in der verriegelten Stellung ist. Ein solcher zweifacher Hintergriff ist besonders robust. An beiden Verengungen kann besonders genau gefertigt werden. Die Sperrkugeln werden in dieser Variante durch die Führungsaufnahme eingeführt; die Bohrung führt durch die Führungsaufnahme. Der Durchmesser der Führungsaufnahme ist hier größer als der Durchmesser einer Sperrkugel.

Vorteilhaft ist eine Verfahrensvariante, bei der in Schritt b) der Materialabtrag durch Fräsen, insbesondere Zirkularfräsen, erfolgt. Fräsen hat sich für einen genauen Materialabtrag in der Bohrung besonders bewährt. Man beachte, dass der Fräser einen gegenüber einem Fräshalter seitlich ausgreifenden Fräskopf haben sollte, so dass der Fräskopf hinter der Verengung in der Bohrung Material abtragen kann, ohne dass gleichzeitig die Verengung ebenso geweitet wird. Der Fräskopf ist in der Regel kürzer ausgebildet als die Länge der Bohrung.

Bei einer vorteilhaften Variante ist vorgesehen, dass in Schritt b) der Materialabtrag so erfolgt, dass eine resultierende Verengung zur Sperrkugel, wenn diese gegen die resultierende Verengung gedrückt wird, einen vollständig umlaufenden Kontakt ausbildet. Eine ringförmige Anlage an die Sperrkugel ist mechanisch besonders robust und verschleißarm, und kann Kräfte von der Sperrkugel gut im Material des Hülsenbauteils verteilen. Weiterhin kann der aus der Verengung herausragende Teil der Sperrkugel in der verriegelten Stellung sehr genau vorgegeben bzw. positioniert werden.

Ebenso vorteilhaft ist eine Verfahrensvariante, bei der in Schritt b) der Materialabtrag so erfolgt, dass die Bohrung in einem sich an eine resultierende Verengung anschließenden Bereich in einer Schnittebene entlang einer Bohrungsachse der Bohrung gekrümmt verläuft, insbesondere mit einem einheitlichen Krümmungsradius in dieser Schnittebene. Durch den gekrümmten Verlauf verengt sich die Bohrung allmählich auf die Verengung zu und ermöglicht eine flache Anlage an die Sperrkugel. Dies reduziert die Kraftspitzen an der Verengung, was zu vermindertem Verschleiß und einer Verringerung der Gefahr von Materialausbrüchen an der Verengung führt. Ein einheitlicher Krümmungsradius im sich an die Verengung anschließenden Bereich ist besonders einfach zu fertigen. Der sich an die Bohrung anschließende Bereich weist typischerweise eine Tiefe (in Richtung der Bohrungsachse) von wenigstens 10%, bevorzugt wenigstens 20%, des Durchmessers der Sperrkugel auf.

In einer bevorzugten Weiterentwicklung dieser Variante weist der sich an die Verengung anschließende Bereich in der Schnittebene entlang der Bohrungsachse der Bohrung einen Krümmungsradius auf, der näherungsweise dem Krümmungsradius der Sperrkugel entspricht, insbesondere wobei in dem sich anschließenden Bereich der Krümmungsradius maximal 40% kleiner und maximal 40% größer ist als der Krümmungsradius der Sperrkugel. Ähnliche Krümmungsradien der Bohrung im radial äußeren, sich an die Verengung anschließenden Abschnitt und der Sperrkugel ermöglichen eine besonders flache gegenseitige Anlage.

Besonders bevorzugt ist eine Variante, bei der in Schritt c) und d) der Unterdruck an der wenigstens einen Verengung relativ zur Führungsaufnahme durch eine Pumpe erzeugt wird, die an der wenigstens einen Verengung saugt. Dies hat sich in der Praxis bewährt, zumal nur eine vergleichsweise geringe Saugleistung der Pumpe benötigt wird, um eine Sperrkugel üblicher Größe (mit einem Durchmesser von typischerweise 1,5 mm bis 7,5 mm) an ihre Verengung zu saugen.

Bei einer vorteilhaften Variante wird am Ende von Schritt c) der korrekte Sitz der wenigstens einen Sperrkugel durch eine oder mehrere Luftdruckmessungen überprüft. Luftdruckmessungen sind einfach durchzuführen und erlauben einen zuverlässigen Aufschluss über einen korrekten Sitz der Sperrkugel. Bei korrektem Sitz der Sperrkugel an der Verengung wird die Verengung weitgehend abgedichtet, was eine erhebliche Druckdifferenz vor und hinter der Verengung bewirkt ("Drosseleffekt"). Wird beispielsweise an der Verengung von außen gesaugt, fällt der Druck außen hinter der Verengung bei korrektem Sitz der Sperrkugel stark ab, während bei nicht korrekt sitzender Sperrkugel oder fehlender Sperrkugel der Druck weniger oder fast gar nicht abfällt, da durch die offene Verengung Luft durch die Führungsaufnahme nachströmt. Typischerweise wird der Luftdruck außen hinter der Verengung (bzw. an einem mit diesem Ort verbundenen Raum) gemessen.

Bevorzugt ist weiterhin eine Variante, bei der vorgesehen ist, dass während oder nach Schritt d) der Stößel axial so positioniert wird, dass ein dünner Abschnitt, insbesondere eine umlaufende Ausnehmung, des Stößels auf Höhe der Bohrung des Hülsenbauteils angeordnet ist, so dass die wenigstens eine Sperrkugel in den dünnen Abschnitt zurückfallen kann,
und dass anschließend zeitweilig eine Fixierhülse über das Hülsenbauteil geschoben wird, welche die wenigstens eine Sperrkugel nach innen in die Bohrung drückt, so dass die wenigstens eine Sperrkugel nicht aus der Verengung herausragt. In dieser Variante wird der Stößel in das Hülsenbauteil eingeführt und in die entriegelte Stellung gebracht, so dass die Sperrkugeln ein Herausnehmen des teilmontierten Kugelsperrbolzens aus einer (im Wesentlichen zylindrischen) Aufnahme (Halterung) nicht blockieren. Mit der Fixierhülse werden die Sperrkugeln in der zurückgefallenen Position gehalten, um ein Verfahren des Stößels im Hülsenbauteil bzw. ein Herausfallen des Stößels zu blockieren, bis die Montage des Kugelsperrbolzens fortgesetzt bzw. abgeschlossen wird, etwa mit der Anbringung eines Griffteils, eines Betätigungsknopfs (Druckknopfs) und/oder einer Feder.

Ebenfalls bevorzugt ist eine Variante des erfindungsgemäßen Fertigungsverfahrens, wobei nach Schritt d) das Hülsenbauteil mit einem Griffteil versehen wird und eine Feder zwischen dem Stößel oder einem am Stößel montierten Betätigungsknopf einerseits und dem Hülsenbauteil oder dem auf dem Hülsenbauteil montierten Griffteil andererseits angeordnet wird. Mit der Feder kann auf einfache Weise der Stößel in eine der beiden Verfahrstellungen (verriegelt oder entriegelt) vorgespannt werden, was die Bedienung des Kugelsperrbolzens komfortabler und seine Verwendung zuverlässiger macht.

### Erfindungsgemäße Montage-Vorrichtungen

In den Rahmen der vorliegenden Erfindung fällt auch eine Montage-Vorrichtung zur Durchführung der Schritte c) und d) eines oben beschriebenen, erfindungsgemäßen Verfahrens, umfassend
- eine Grundplatte mit einer Halterung für einen Wechseleinsatz, und
- einen Wechseleinsatz mit einer Aufnahme für ein Hülsenbauteil, wobei der Wechseleinsatz in der Halterung austauschbar gehalten ist, sowie einem axial verschiebbaren Montagebolzen zum Einfahren in die Führungsaufnahme eines in der Aufnahme gehaltenen Hülsenbauteils,
wobei die Grundplatte an einer Außenseite einen Vakuumanschluss aufweist, der mit einem inneren Ringraum des Wechseleinsatzes verbunden ist, wobei mit dem inneren Ringraum ein in der Aufnahme angeordnetes Hülsenbauteil zumindest axial auf Höhe der Bohrung des Hülsenbauteils umgriffen wird.
Mit der erfindungsgemäßen Montage-Vorrichtung kann ein in der Aufnahme angeordnetes Hülsenbauteil axial auf Höhe seiner quer zur Führungsaufnahme verlaufenden Bohrung besaugt werden, um eine oder mehrere Sperrkugeln nach außen zu ziehen. Aufgrund des inneren Ringraums kommt es dabei auf die Verdrehstellung des im Außenquerschnitt typischerweise kreisrunden Hülsenbauteils in der Aufnahme nicht an, was in der Praxis eine große Erleichterung für Montagearbeiter darstellt. Der Wechseleinsatz einschließlich des Montagebolzens ist geometrisch auf einen bestimmten Typ von Hülsenbauteil (insbesondere in Hinblick auf dessen Außendurchmesser, Länge, Durchmesser der Führungsaufnahme sowie axiale Position der Bohrung) abgestimmt. Um bei verschiedenen Typen von Hülsenbauteilen die Sperrkugeln montieren zu können, kann der Wechseleinsatz leicht gegen weitere Wechseleinsätze ausgetauscht werden.

Bei einer bevorzugten Ausführungsform der erfindungsgemäßen Montage-Vorrichtung weist der Wechseleinsatz zumindest zwei umlaufende Dichtungen an der Aufnahme axial beiderseits des inneren Ringsraums auf. Durch die beiden umlaufenden Dichtungen, meist als O-Ringe ausgebildet, wird ein Luftdurchtritt (bzw. eine Leckrate) zwischen dem Wechseleinsatz und einem in der Aufnahme angeordneten Hülsenbauteil minimiert. Dies spart Energie und verbessert auch den Halt der Sperrkugel an ihrer zugehörigen Verengung.

Besonders bevorzugt ist weiterhin eine Ausführungsform, derart, dass zwischen der Grundplatte und dem Wechseleinsatz ein äußerer Ringraum ausgebildet ist, wobei der äußere Ringraum durch die Grundplatte hindurch mit dem Vakuumanschluss verbunden ist, und wobei der äußere Ringraum durch den Wechseleinsatz hindurch mit dem inneren Ringraum verbunden ist, insbesondere mittels mehrerer Kanäle jeweils mit einem Durchmesser kleiner als der Durchmesser der wenigstens einen Sperrkugel, und dass die Grundplatte und/oder der Wechseleinsatz zumindest zwei umlaufende Dichtungen axial beiderseits des äußeren Ringraums aufweisen. Durch den äußeren Ringraum ist es möglich, den Wechseleinsatz in einer beliebigen Verdrehstellung in der Halterung einzusetzen, was Justagearbeiten erspart. Zum anderen kann vom äußeren Ringraum aus eine Vielzahl (bevorzugt wenigstens sechs) von in Umfangsrichtung verteilten Kanälen zum inneren Ringraum geführt werden, mit denen eine gute Saugleistung an den inneren Ringraum übertragen werden kann. Jeder einzelne Kanal kann dann einen vergleichsweise kleinen Durchmesser aufweisen, insbesondere so klein, dass eine Sperrkugel nicht durch den Kanal hindurchtreten kann; dies schützt eine angeschlossene Vakuumpumpe vor Beschädigungen, falls versehentlich eine Sperrkugel in den inneren Ringraum gelangen sollte. Durch die beiden umlaufenden Dichtungen wird wiederum ein Luftdurchtritt (bzw. eine Leckrate) zwischen der Grundplatte und dem Wechseleinsatz minimiert, was Energie einspart und den Halt der Sperrkugel an ihrer Verengung verbessert.

Vorteilhaft ist auch eine Ausführungsform, bei der die Vorrichtung weiterhin eine Pumpstation umfasst, aufweisend wenigstens eine Vakuumpumpe zum Besaugen des Vakuumanschlusses, insbesondere wobei die Vakuumpumpe eine Venturi-Düsen-Pumpe ist. Durch Besaugen des Vakuumanschlusses kann auf besonders einfache Weise ein relativer Unterdruck radial außen an der Verengung relativ zum Führungskanal innen erreicht werden.

Eine bevorzugte Weiterbildung hierzu sieht vor, dass die Pumpstation weiterhin wenigstens eine Luftdruckmesseinrichtung umfasst, mit der der am Vakuumanschluss erreichte Luftdruck messbar ist,
insbesondere wobei die Vorrichtung eine Auswerteeinheit, bevorzugt umfassend eine Lichtsignalanzeige, aufweist, mit der das Unterschreiten eines vorgegebenen Luftdrucks am Vakuumanschluss signalisiert werden kann. Durch das Messen des Luftdrucks am Vakuumanschluss - dem im Wesentlichen der Luftdruck außen an der Verengung oder den Verengungen der Bohrung entspricht - kann der korrekte Sitz der Sperrkugel oder der Sperrkugeln überprüft werden. Bei korrektem Sitz einer Sperrkugel verschließt diese im Wesentlichen die zugehörige Verengung, und der Luftdruck im Vakuumanschluss fällt entsprechend stark ab. Durch eine Auswerteeinheit bzw. eine Meldeeinrichtung für einen ausreichend geringen Luftdruck (d.h. das Unterschreiten eines vorgegebenen Luftdruck-Schwellwerts) kann ein Montagearbeiter leicht erkennen, dass die Sperrkugel oder die Sperrkugeln korrekt sitzen, und er mit dem nächsten Schritt d), also dem Einschieben des Stößels, fortfahren kann. Bewährt hat sich ein Lichtsignal "rot" für einen (noch) nicht korrekten Sitz der Sperrkugeln, und ein Lichtsignal "grün" für einen korrekten Sitz der Sperrkugeln. Ebenso sind akustische Signale alternativ oder zusätzlich möglich.

Bei einer anderen, vorteilhaften Weiterbildung umfasst die Pumpstation wenigstens zwei Vakuumpumpen mit unterschiedlicher Pumpleistung, von denen jeweils eine zum Besaugen des Vakuumanschlusses ausgewählt werden kann. Die verschiedenen Vakuumpumpen werden mit verschiedenen Typen von Hülsenbauteilen eingesetzt, bei denen unterschiedliche Leckraten an den (noch nicht verschlossenen) Verengungen der Bohrungen auftreten. Aus der jeweiligen Leckrate und der jeweiligen Pumpleistung ergibt sich der sich einstellende Luftdruck. Durch Anpassung der Pumpleistung an die Leckrate kann bei der Ergänzung der letzten Sperrkugel jeweils ein gut messbarer Luftdruckabfall für verschiede Typen von Hülsenbauteilen erreicht werden.

Vorteilhaft ist weiterhin eine Ausführungsform, die vorsieht, dass der axial verschiebbare Montagebolzen mit einer Feder in eine Grundposition vorgespannt ist, wobei der Montagebolzen in der Grundposition axial soweit in die Führungsaufnahme eines in der Aufnahme gehaltenen Hülsenbauteils eingefahren ist, dass eine auf dem Montagebolzen aufliegende Sperrkugel axial auf Höhe der Bohrung des Hülsenbauteils angeordnet ist. Gemäß dieser Ausführungsform wird der axial verschiebbare Montagebolzen durch eine Feder in eine maximal ausgefahrene Grundposition vorgespannt. Der Montagebolzen kann dann in ein in der Aufnahme angeordnetes Hülsenbauteil soweit einfahren, dass das Ende des Montagebolzens eine Auflage für eine Sperrkugel in einer axialen Höhe darstellt, in der die Sperrkugel in die Bohrung gesaugt werden kann. Wird später der Stößel in die Führungsaufnahme eingeführt, kann mit dem Stößel der Montagebolzen gegen die Federkraft aus dem Hülsenbauteil teilweise oder ganz herausgeschoben werden, so dass der Montagebolzen die weitere Montage nicht behindert.

Schließlich fällt auch in den Rahmen der vorliegenden Erfindung ein Montage-System zur Durchführung der Schritte c) und d) des obigen erfindungsgemäßen Verfahrens, umfassend eine obige erfindungsgemäße Montage-Vorrichtung sowie mindestens einen weiteren Wechseleinsatz,
wobei verschiedene Wechseleinsätze unterschiedlich große Aufnahmen für Hülsenbauteile aufweisen,
und wobei die Montagebolzen der verschiedenen Wechseleinsätze unterschiedliche Längen und/oder unterschiedliche Durchmesser aufweisen. Mit dem Montage-System kann auf einfache Weise eine Vielzahl von Kugelsperrbolzen-Typen montiert werden; für jeden Typ kann ein unterschiedlicher Wechseleinsatz in derselben Grundplatte eingesetzt werden. Die Umrüstung kann sehr schnell erfolgen: Für einen zu montierenden Typ von Kugelsperrbolzen wird einfach der zugehörige Wechseleinsatz ausgewählt und in die Halterung der Grundplatte eingesetzt. Und arretiert, etwa mit Spannbolzen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Querschnittsansicht eines Kugelsperrbolzens, der mit dem erfindungsgemäßen Verfahren gefertigt werden kann;
- Fig. 2a: eine schematische Querschnittsansicht eines Hülsenbauteils, in das gemäß Schritt a) des erfindungsgemäßen Verfahrens eine Bohrung eingebracht wurde;
- Fig. 2b: ein vergrößerter Ausschnitt aus Fig. 2a;
- Fig. 3a: eine schematische Querschnittsansicht des Hülsenbauteils von Fig. 2a, in dem gemäß Schritt b) des erfindungsgemäßen Verfahrens die Bohrung in einem inneren Abschnitt durch Fräsen geweitet wird;
- Fig. 3b: ein vergrößerter Ausschnitt aus Fig. 3a;
- Fig. 4a: ein Ausschnitt eines Hülsenbauteils ähnlich Fig. 3a, jedoch mit einer Sperrkugel in der Bohrung an einer Verengung;
- Fig. 4b: das Hülsenbauteil mit Sperrkugel von Fig. 4a, in einem Querschnitt senkrecht zur axialen Richtung;
- Fig. 5: eine schematische Schrägansicht einer erfindungsgemäßen Montage-Vorrichtung zur Durchführung der Schritte c) und d) des erfindungsgemäßen Verfahrens;
- Fig. 6: eine schematische Querschnittsansicht der Montage-Vorrichtung von Fig. 5;
- Fig. 7a: ein Ausschnitt der schematischen Querschnittsansicht der Montage-Vorrichtung von Fig. 6, mit eingeführtem Hülsenbauteil;
- Fig. 7b: der Ausschnitt von Fig. 7a, mit einer ersten, durch Anlegen eines Vakuums gemäß Schritt c) des erfindungsgemäßen Verfahrens positionierten Sperrkugel;
- Fig. 7c: der Ausschnitt von Fig. 7b, mit einer zweiten, durch Anlegen eines Vakuums gemäß Schritt c) des erfindungsgemäßen Verfahrens Sperrkugel; positionierten
- Fig. 7d: der Ausschnitt von Fig. 7c, mit gemäß Schritt d) des erfindungsgemäßen Verfahrens bei angelegtem Vakuum eingeführtem Stößel;
- Fig. 7e: der Ausschnitt von Fig. 7d, mit zurückgefallenen Sperrkugeln nach Abschalten des Vakuums;
- Fig. 7f: der Ausschnitt von Fig. 7e, mit aus dem Wechseleinsatz herausgezogenem Hülsenbauteil, auf das eine Fixierhülse aufgesetzt ist;
- Fig. 8: eine schematische Darstellung eines erfindungsgemäßen Montage-Systems.

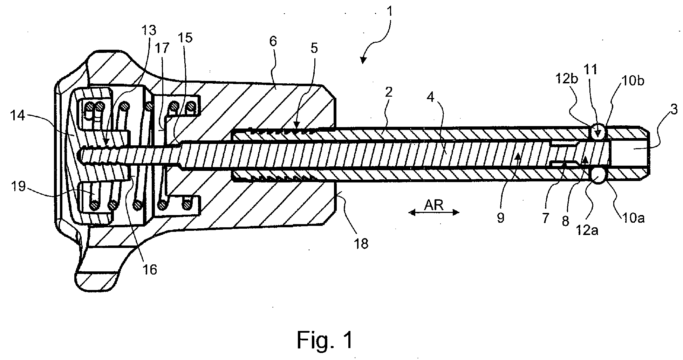

Die Fig. 1 zeigt im schematischen Querschnitt ein Beispiel eines Kugelsperrbolzens 1, der mit dem erfindungsgemäßen Verfahren gefertigt werden kann.

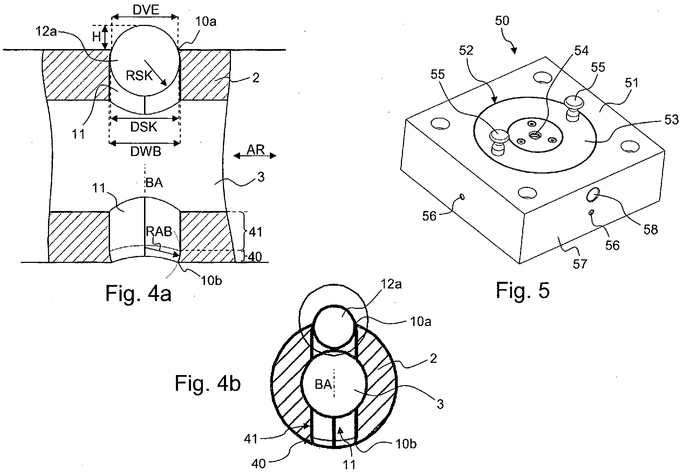

Der Kugelsperrbolzen 1 verfügt über ein im Wesentlichen rohrförmiges Hülsenbauteil 2 mit rundem Querschnitt (vgl. Fig. 4b), in welchem eine in axialer Richtung AR verlaufende Führungsaufnahme (auch genannt Zentralbohrung) 3 für einen Stößel (auch genannt Sperrachse) 4 vorgesehen ist. Das Hülsenbauteil 2 ist an einem in Fig. 1 linken Ende über eine Tannenbaumverzahnung 5 fest mit einem Griffteil 6 verbunden. In der Nähe des in Fig. 1 rechten Endes des Hülsenbauteils 2 ist eine quer zur Führungsaufnahme 3 bzw. quer zur axialen Richtung AR verlaufende, durchgehende Bohrung 11 vorgesehen, in der beiderseits des Stößels 4 Sperrkugeln 12a, 12b angeordnet sind. Die Bohrung 11 endet außen jeweils an Verengungen 10a, 10b, die von den Sperrkugeln 12a, 12b nicht passiert werden können, aber durch die die Sperrkugeln 12a, 12b teilweise herausragen können, um eine Struktur oder ein Bauteil (nicht gezeigt) zu hintergreifen.

Der Stößel 4 verfügt zwischen einem Endabschnitt 8 an seinem in Fig. 1 rechten, dem Griffteil 6 abgewandten Ende und einem Mittelabschnitt 9 über einen dünnen Abschnitt 7, hier ausgebildet durch eine umlaufende Ausnehmung ("Nut"). An seinem in Fig. 1 linken Ende ist der Stößel 4 über eine Tannenbaumverzahnung 13 fest mit einem Betätigungsknopf 14 verbunden.

Zwischen dem Betätigungsknopf 14 und dem Griffteil 6 ist eine Feder 19, hier eine Druckfeder, angeordnet, die den Stößel 4 in Fig. 1 nach links bis an einen durch eine Schulter 15 des Griffteils 6 ausgebildeten Anschlag vorspannt, wie in der Fig. 1 gezeigt. In dieser *verriegelten Stellung* zwingt der Endabschnitt 8 die Sperrkugeln 12a, 12b, radial nach außen zu den Verengungen 10a, 10b, so dass die Sperrkugeln 12a, 12b aus den Verengungen 10a, 10b herausragen.

Zwischen den Sperrkugeln 12a, 12b und einer Anlegekante 18 des Griffteils 6 kann dann z.B. ein Bauteil an einer Struktur verklemmt werden, wobei der Sperrbolzen 1 das Bauteil und die Struktur durchragt.

Durch Eindrücken des Betätigungsknopfes 14, nach rechts in Fig. 1, wird der Stößel 4 im Hülsenbauteil 2 axial verschoben, bis eine Anlegekante 16 des Betätigungsknopfes 14 an einem Grund 17 des Griffteils 6 als Anschlag anstößt, wobei der dünne Abschnitt 7 des Stößels 4 axial auf die Höhe der Bohrung 11 gelangt (nicht dargestellt). In dieser *entriegelten Stellung* können die Sperrkugeln 12a, 12b in den Freiraum am dünnen Abschnitt 7 zurückfallen, und gegebenenfalls auch durch äußere Kraft (etwa bei Kontakt mit einer Struktur oder einem Bauteil) in die Bohrung 11 radial nach innen zurückgedrückt werden. Der Raum zwischen der jeweiligen Verengung 10a, 10b und dem dünnen Abschnitt 7 ist groß genug, dass die jeweilige Sperrkugel 12a, 12b vollständig aufgenommen werden kann und nicht mehr aus der jeweiligen Verengung 10a, 10b nach außen herausragt.

Im Folgenden wird erläutert, wie gemäß der Erfindung die Fertigung bzw. Montage eines solchen Kugelsperrbolzens 1 erfolgt.

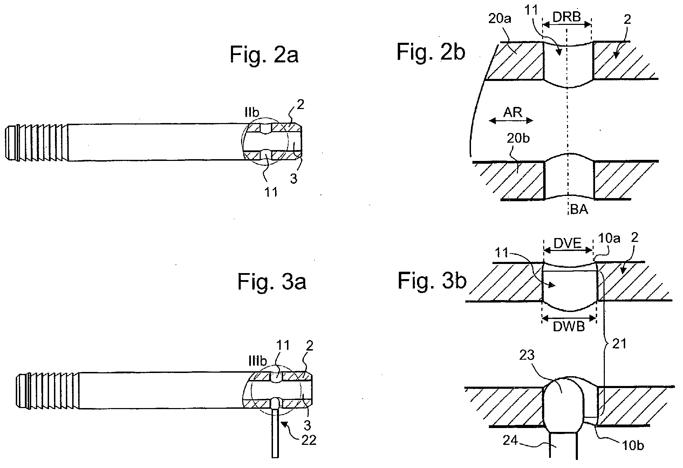

Wie in **Fig. 2a** in der teilweise geschnittenen Darstellung und der Vergrößerung von **Fig. 2b** (vgl. den Kreis IIb in Fig. 2a) ersichtlich, wird zunächst eine Bohrung 11 ("Rohbohrung") in das Hülsenbauteil 2 eingebracht, typischerweise mit einem metallischen Bohrer. Die Bohrung 11 weist eine Bohrungsachse BA auf, die quer (senkrecht) zur axialen Richtung AR des Hülsenbauteils 2 verläuft. Die Bohrung 11 ist hier eine durchgehende Bohrung 11, d.h. sie durchstößt im Querschnitt beide Wände 20a, 20b des Hülsenbauteils 2. In jeder dieser Wände 20a, 20b liegt ein Teil der Bohrung 11. Die Bohrung 11 kreuzt die Führungsaufnahme 3. Die Bohrung 11 wird mit einem Durchmesser DRB gefertigt, welcher kleiner ist als der Durchmesser einer Sperrkugel (siehe dazu unten).

Anschließend wird die Bohrung 11 in einem inneren Teilabschnitt 21 durch Materialabtrag geweitet, siehe **Fig. 3a** und die Vergrößerung von **Fig. 3b** (vgl. Kreis IIIb in Fig. 3a), hier indem mit einem Fräser 22 Material des Hülsenbauteils 2 von der Innenseite der Bohrung 11 weggenommen wird. Ein Fräskopf 23 auf einem gegenüber dem Fräskopf 23 schmaleren Fräshalter 24 hintergreift dabei einen äußeren Teil der Bohrung 11, so dass an den äußeren Enden der Bohrung 11 jeweils eine Verengung 10a, 10b verbleibt.

Im Bereich des inneren Teilabschnitts 21 wird die Bohrung 11 auf einen Durchmesser DWB geweitet, der größer ist als der Durchmesser einer Sperrkugel. Im Bereich der Verengungen 10a, 10b ergibt sich ein (kleinster) Durchmesser von DVE, der kleiner ist als der Durchmesser einer Sperrkugel, und der gleich oder größer ist dem Durchmesser DRB der Rohbohrung; im Bereich der Verengungen 10a, 10b kann also durchaus auch etwas Material abgetragen werden, solange der Durchmesser DVE der Verengung klein genug bleibt, um eine Sperrkugel zu blockieren. Ebenso kann der Übergang von der Verengung 10a, 10b zum inneren Teilabschnitt 21 der Bohrung 11 je nach Anforderung gestaltet werden (sieh dazu Fig. 4a, 4b).

Nach dem Fräsen ist das Hülsenbauteil 2 bereit für die Aufnahme der Sperrkugeln in der Bohrung 11. Die geometrischen Verhältnisse an der Bohrung 11 sollen beispielhaft mit einer Sperrkugel 12a in **Fig. 4a** (im Querschnitt entlang der axialen Richtung AR) und in **Fig. 4b** (im Querschnitt senkrecht zur axialen Richtung AR) erläutert werden; beide Querschnitte enthalten jeweils die Bohrungsachse BA der Bohrung 11.

Eine Sperrkugel 12a in der Bohrung 11 kann radial nach außen vordringen, bis die Sperrkugel 12a an der Verengung 10a anliegt. Der Materialabtrag bei der Nachbearbeiten der Bohrung 11, etwa durch Fräsen, kann so erfolgen, dass sich eine umlaufende, ringförmige Anlage der Verengung 10a an der Sperrkugel 12a ergibt; in den Figuren 4a und 4b kann dies dadurch erkannt werden, dass die Sperrkugel 12a in beiden Querschnitten an der Verengung 10a anliegt.

In dem vorgestellten Beispiel grenzt an die Verengungen 10a, 10b ein sich anschließender, gekrümmter Bereich 40 der Bohrung 11. Dieser weist hier einen einheitlichen Krümmungsradius RAB auf, der gleich ist dem (Krümmungs-)Radius RSK der Sperrkugel 12a. Daran schließt sich wiederum ein gerade verlaufender Abschnitt 41 der Bohrung 11 an. Durch den gekrümmten Bereich 40 kann eine sehr flache Anlage der Sperrkugel 12a an das Hülsenbauteil 2 bzw. die Bohrung 11 erreicht werden, was Kraftspitzen und damit Verschleiß reduziert. Man beachte, dass aber auch mit geringen Abweichungen von RAB zu RSK, etwa bis 40%, noch eine vorteilhaft relativ flache gegenseitige Anlage erreicht werden kann.

Wie aus Fig. 4a gut zu erkennen ist, ist der Durchmesser DVE der Verengung 10a kleiner als der Durchmesser DSK der Sperrkugel 12a, so dass diese teilweise umgriffen wird. Allerdings ist die Höhe H des maximalen Überstands der Sperrkugel 12a umso größer, je näher DVE an DSK herankommt. Der Durchmesser DWB der (geweiteten) Bohrung 11 ist wiederum größer als der Durchmesser DSK der Sperrkugel; hierbei genügt es in der Regel, wenn DWB ein geringes Spiel, beispielsweise von 0,1 mm oder noch weniger bezogen auf den vollen Durchmesser, für die Sperrkugel 12a lässt.

Da die Verengungen 10a, 10b zu klein sind, um durch diese eine Sperrkugel 12a in die Bohrung 11 einzuführen, wird für die weitere Montage des Kugelsperrbolzens 1 so vorgegangen, dass die Sperrkugeln 12a, 12b durch die Führungsaufnahme 3 des Hülsenbauteils 2 in die Bohrung 11 eingeführt werden. Die Sperrkugeln 12a, 12b werden dabei mithilfe eines relativen Vakuums positioniert, und bei Anliegen dieses relativen Vakuums wird der Stößel 4 eingeschoben. Für diese Schritte kann gemäß der Erfindung eine besondere Montage-Vorrichtung 50 eingesetzt werden.

**Fig. 5** illustriert zunächst in einer schematischen Übersicht eine solche Montage-Vorrichtung 50. Die Montage-Vorrichtung 50 weist eine Grundplatte (oder einen Grundkörper) 51 auf, in welcher mittels einer Halterung 52 (die hier vor allem eine geeignete Ausnehmung darstellt) ein Wechseleinsatz 53 gehalten ist. Der Wechseleinsatz 53 umfasst eine Aufnahme 54 für ein Hülsenbauteil bzw. einen teilmontierten Kugelsperrbolzen. Für einen leichten Austausch des Wechseleinsatzes 53 ist dieser mittels zwei Griffen 55 leicht aus der Grundplatte 51 herausnehmbar, wobei der Wechseleinsatz 53 mit Spannbolzen 56 oder auch federnden Druckstücken reversibel in der Grundplatte 51 fixiert werden kann. An einer Außenseite 57 der Grundplatte 51 ist außerdem ein Vakuumanschluss 58 vorgesehen, mit welchem die Verengungen eines in der Aufnahme 54 gehaltenen Hülsenbauteils besaugt werden können.

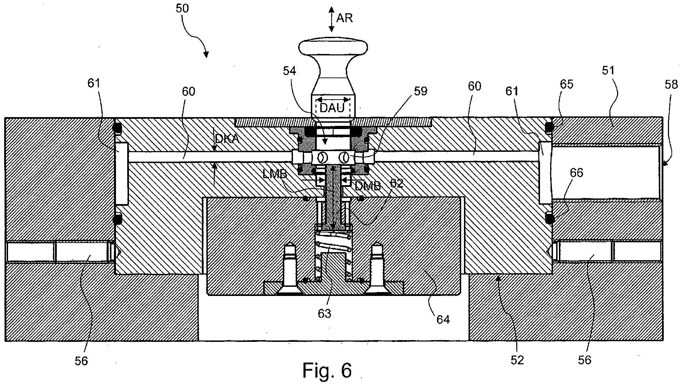

**Fig. 6** illustriert die Montage-Vorrichtung 50 in einem Querschnitt näher.

Der in der Halterung 52 der Grundplatte 51 mit den Spannbolzen 56 fixierte Wechseleinsatz 53 bildet um die Aufnahme 54 einen inneren Ringraum 59 aus. In diesen münden eine Vielzahl (hier sechs) Kanäle 60, die mit einem äußeren Ringraum 61 verbunden sind. Die Kanäle 60 haben einen Durchmesser DKA, der kleiner ist als der Durchmesser einer Sperrkugel. Der äußere Ringraum 61 ist wiederum mit dem Vakuumanschluss 58 verbunden. Der äußere Ringraum 61 wird durch zwei umlaufende Dichtungen 65, 66 axial beiderseits des äußeren Ringraums 61 abgedichtet, wobei diese Dichtungen 65, 66 hier durch O-Ringe aus Gummi ausgebildet sind, die jeweils in einer Nut im Wechseleinsatz 53 angeordnet sind.

In die Aufnahme 54 ragt weiterhin ein in axialer Richtung AR verfahrbarer Montagebolzen 62. Dieser wird durch eine Feder 63, hier eine Druckfeder, in eine maximal in die Aufnahme 54 eingefahrene Stellung vorgespannt ("Grundposition"), kann aber gegen die Kraft der Feder 63 nach unten gedrückt werden. Eine Montagebolzenhalterungs-Baugruppe 64, in der der Montagebolzen 62 gelagert ist, ist in nicht näher dargestellter Weise am übrigen Wechseleinsatz 53 befestigt.

Die Aufnahme 54, insbesondere der Durchmesser DAU der Aufnahme 54, und der Montagebolzen 62, insbesondere der Durchmesser DMB des in die Aufnahme einragenden Montagebolzens 62 und die Länge LMB des Montagebolzens 62 (insbesondere die in die Aufnahme 54 einragende Teillänge) sind auf ein in der Aufnahme 54 aufzunehmendes Hülsenbauteil abgestimmt.

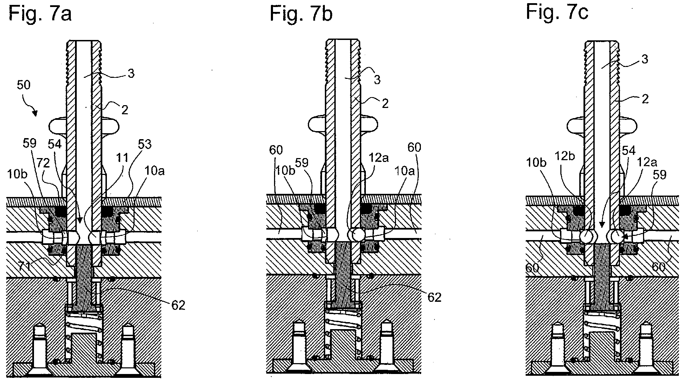

Im Ausschnitt der Montage-Vorrichtung 50 von **Fig. 7a** ist nunmehr ein Hülsenbauteil 2 in der Aufnahme 54 angeordnet worden, beispielsweise indem ein Montagearbeiter das Hülsenbauteil 2 per Hand von oben in die Aufnahme 54 eingeführt hat. Der Montagebolzen 62 dringt dabei von unten in die Führungsaufnahme 3 des Hülsenbauteils 2 ein, wobei der Montagebolzen 62 voll nach oben ausfahren kann, entsprechend seiner Grundposition. In dieser Grundposition befindet sich die Oberkante des Montagebolzens 62 ungefähr auf Höhe der Unterkante der (bereits geweiteten) Bohrung 11 des Hülsenbauteils 2. Der innere Ringraum 59 umgreift das Hülsenbauteil 2 vollumfänglich auf Höhe der Bohrung 11, und damit auch die zugehörigen Verengungen 10a, 10b. Der innere Ringraum 59 wird durch zwei umlaufende Dichtungen 71, 72 axial beiderseits des inneren Ringraums 59 abgedichtet, wobei hier die Dichtung 71 durch einen O-Ring aus Gummi ausgebildet ist, und die Dichtung 72 eine Verbunddichtung aus einem O-Ring und einer Stangendichtung aus Elastomermaterial ist, und wobei weiterhin die Dichtungen 71, 72 in Nuten des Wechseleinsatzes 53 angeordnet sind und an dem Hülsenbauteil 2 außen anliegen.

Sodann wird der Vakuumanschluss durch eine Vakuumpumpe besaugt, wodurch Luft aus der Führungsaufnahme 3 durch die Verengungen 10a, 10b, durch den inneren Ringraum 59 und die Kanäle 60 nach außen gesaugt wird, vgl. den Ausschnitt von **Fig. 7b****.** Eine erste Sperrkugel 12a, die vom Montagearbeiter von oben in die Führungsaufnahme 3 eingeworfen wurde, wird nach ihrem Auftreffen an der Oberseite des Montagebolzens 62 an eine der Verengungen 10a, 10b, hier die rechte Verengung 10a, gezogen.

Anschließend wird eine zweite Sperrkugel 12b von oben in die Führungsaufnahme 3 eingeworfen, vgl. den Ausschnitt von **Fig. 7c****.** Diese wird sodann zur anderen, linken Verengung 10b gezogen. Nach dem Einführen der zweiten Sperrkugel 12b sollte der korrekte Sitz der Sperrkugeln 12a, 12b überprüft werden. Hierfür kann der erreichte Luftdruck am Vakuumanschluss (der im Wesentlichen dem Luftdruck im inneren Ringkanal 59 oder auch in den Kanälen 60 entspricht) überprüft werden; ein korrekter Sitz der Sperrkugeln 12a, 12b geht mit einem recht niedrigen Luftdruck, unterhalb eines geeignet bestimmten Schwellwerts, einher. Nur bei korrektem Sitz kann die Montage des Kugelsperrbolzens normal fortgesetzt werden; bei nicht korrektem Sitz empfiehlt es sich, das Hülsenbauteil 2 wieder zu entfernen, die bisher eingebrachten Sperrkugeln 12a, 12b aus dem Hülsenbauteil 2 herauszuschütteln, das Hülsenbauteil 2 erneut in die Aufnahme 54 einzusetzen und die Sperrkugeln 12a, 12b neu einzuführen.

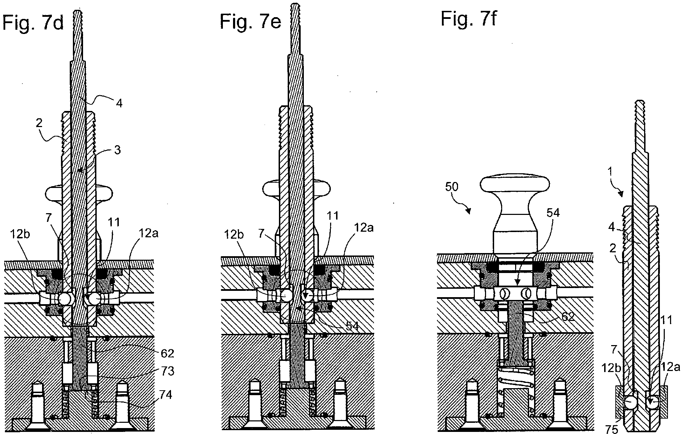

Bei normaler Fortsetzung der Montage wird nun, während weiterhin durch das anliegende Vakuum die Sperrkugeln 12a, 12b nach außen gezogen werden, der Stößel 4 von oben in die Führungsaufnahme 3 des Hülsenbauteils 2 eingeführt, vgl. den Ausschnitt von **Fig. 7d****.** Der Stößel 4 wird so weit eingeführt, dass der dünne Abschnitt 7 des Stößels 4 axial auf der Höhe der Bohrung 11 des Hülsenbauteil 2 ist; dafür wird der Montagebolzen 62 mit dem Stößel 4 vom Montagearbeiter manuell gegen die Kraft der Feder 63 eingedrückt, bis der Montagebolzen 62 mit seiner Unterkante 73 gegen einen Anschlag 74 stößt.

Sodann wird das Vakuum abgeschaltet, vgl. den Ausschnitt von **Fig. 7e****.** Nun können die Sperrkugeln 12a, 12b in die Bohrung 11 bis an den dünnen Abschnitt 7 des Stößels 4 zurückfallen, was spätestens beim anschließenden Herausziehen des Hülsenbauteils 2 mitsamt dem Stößel 4 durch die Ränder der Aufnahme 54 erzwungen wird.

Der Ausschnitt von **Fig. 7f** zeigt dann die Montage-Vorrichtung 50 nach dem Herausziehen des Hülsenbauteils 2 mitsamt dem Stößel 4 (der einstweilen manuell in seiner axialen Position relativ zum Hülsenbauteil 2 festgehalten wird); die Aufnahme 54 ist leer, und der Montagebolzen 62 kehrt nach oben in seine Grundposition zurück. Auf das Hülsenbauteil 2 wird nun eine Fixierhülse 75 aufgeschoben, die die Sperrkugeln 12a, 12b in der zurückgefallenen Position am dünnen Abschnitt 7 des Stößels 4 hält. Die Sperrkugeln 12a, 12b blockieren dadurch ein axiales Verschieben (bzw. verhindern ein Verlieren) des Stößels 4, da die Sperrkugeln 12a, 12b sowohl in die Bohrung 11 des Hülsenbauteils 2 als auch in die umlaufende Ausnehmung des dünnen Abschnitts 7 des Stößels 4 eingreifen.

In diesem Zustand kann die Montage von weiteren Teilen auf dem teilmontierten Kugelsperrbolzen 1 erfolgen, insbesondere das Aufsetzen des Griffteils 6 auf das Hülsenbauteil 2, das Einsetzen der Feder 19 in das Griffteil 6, und das Aufsetzen des Betätigungsknopfes 14 auf den Stößel 4 bei eingeklemmter Feder 19, vgl. dazu Fig. 1. Anschließend kann die Fixierhülse 75 entfernt werden, und der Kugelsperrbolzen 1 ist einsatzbereit.

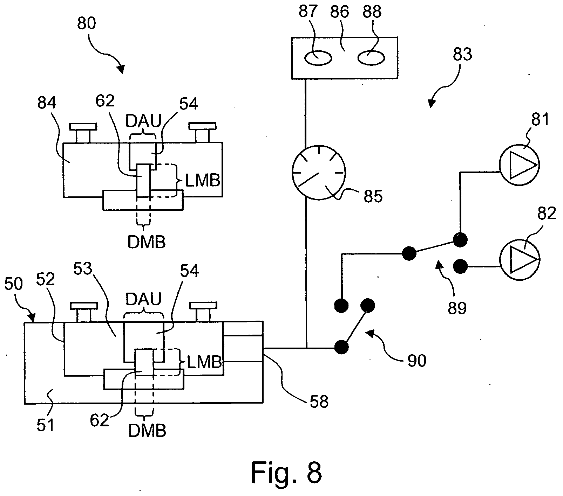

**Fig. 8** zeigt schematisch ein erfindungsgemäßes Montage-System 80, mit dem auf einfache Weise Kugelsperrbolzen unterschiedlichen Typs, insbesondere unterschiedlicher Größe, gefertigt werden können.

Das Montage-System 80 umfasst eine Montage-Vorrichtung 50, wie beispielsweise in Fig. 5 und 6 vorgestellt, mit einer Grundplatte 51 und einem Wechseleinsatz 53. Weiterhin umfasst das Montage-System 80 einen weiteren Wechseleinsatz 84. Die verschiedenen Wechseleinsätze 53, 84 weisen unterschiedliche Durchmesser DAU der Aufnahmen 54, weiterhin unterschiedliche Durchmesser DMB der Montagebolzen 62 und auch unterschiedliche Längen LMB der Montagebolzen 62 auf, insbesondere auch unterschiedliche Teillängen, die in die jeweilige Aufnahme 54 ragen. Die Wechseleinsätze 53, 84 sind in der Grundplatte 51 austauschbar; die äußere Gestalt der Wechseleinsätze 53, 84 ist, zumindest soweit sie für die Anordnung in der Halterung 52 der Grundplatte 51 relevant ist, gleich.

Am Vakuumanschluss 58 der Grundplatte 51 ist eine Pumpstation 83 angeschlossen, hier umfassend zwei Vakuumpumpen 81, 82 unterschiedlicher Pumpleistung (bzw. unterschiedlichen Saugvermögens). Die Vakuumpumpen 81, 82 können insbesondere als Venturi-Düsen-Pumpe oder Drehschieberpumpe ausgebildet sein. Mit einem ersten Schalter 89 kann ausgewählt werden, welche Vakuumpumpe 81, 82 eingesetzt werden soll und auf den Vakuumanschluss 58 geschaltet wird; bevorzugt wird eine nicht benutzte Vakuumpumpe 81, 82 vollständig abgeschaltet. Für den Wechseleinsatz 53 ist hier mit dem ersten Schalter 89 die obere Vakuumpumpe 81 ausgewählt. Mit einem zweiten Schalter 90, der bevorzugt als Fußschalter für einen Montagearbeiter ausgebildet ist oder jedenfalls mit einem Fußschalter betätigt werden kann, kann das Vakuum am Vakuumanschluss 58 ab- und zugeschaltet werden.

Der am Vakuumanschluss 58 erreichte Luftdruck wird mit einer Luftdruckmesseinrichtung (Manometer) 85 gemessen. Eine Auswerteeinheit 86 vergleicht den gemessenen Luftdruck mit einem programmierten Schwellwert. Der Schwellwert ist so gewählt, dass er zwischen dem sich ergebenden Luftdruck bei einer korrekt sitzenden Sperrkugel und dem sich ergebenden Luftdruck bei zwei korrekt sitzenden Sperrkugeln liegt. Ein typischer Schwellwert liegt zwischen 100 mbar und 400 mbar; um diesen Bereich kann die Luftdruckmesseinrichtung 85 relativ exakt Luftdruckwerte bestimmen. Überschreitet der gemessene Luftdruck den Schwellwert, leuchtet an der Auswerteeinheit 86 ein rotes Licht 87. Unterschreitet der gemessene Luftdruck den Schwellwert, so leuchtet an der Auswerteeinheit 86 ein grünes Licht 88, womit ein korrekter Sitz der beiden Sperrkugeln an den Verengungen eines in der jeweiligen Aufnahme 54 sitzenden Hülsenbauteils 2 signalisiert wird. Die Auswerteeinheit 86 stellt somit eine Meldeeinrichtung mit einer aus dem roten Licht 87 und dem grünen Licht 88 bestehenden Lichtsignalanzeige dar.

Wenn in der Montage-Vorrichtung 50 auf den weiteren Wechseleinsatz 84 gewechselt wird, wird auch mit dem ersten Schalter 89 auf die andere Vakuumpumpe 82 umgeschaltet. Deren Pumpleistung ist so gewählt, dass in etwa derselbe Schwellwert an der Auswerteeinheit 86 zur Überprüfung des korrekten Sitzes der Sperrkugeln eingesetzt werden kann, wenn in ein Hülsenbauteil in der Aufnahme 54 dieses Wechseleinsatzes 84 die Sperrkugeln eingesetzt und durch das angelegte Vakuum für das Einführen des Stößels positioniert werden. Falls gewünscht, kann für jede Kombination von Vakuumpumpe 81, 82 und Wechseleinsatz 53, 84 bzw. Typ von Hülsenbauteil ein eigener Schwellwert verwendet werden.

Zusammenfassend schlägt die vorliegende Erfindung vor, bei einem Kugelsperrbolzen die Querbohrung im Hülsenbauteil zunächst mit einem kleineren Durchmesser als für die Sperrkugeln erforderlich zu bohren, und anschließend die Querbohrung mit Ausnahme der Bohrungsenden, die die Sperrkugeln zurückhalten sollen, zu weiten, insbesondere durch Fräsen oder Runddrehen. Die Sperrkugeln werden dann durch die längs verlaufende Führungsaufnahme in das Hülsenbauteil eingeführt und mit einem Luftstrom oder Luftdruck in die Querbohrung getrieben oder gesaugt. Sodann kann der Stößel in das Hülsenbauteil eingeführt werden. Im Rahmen des erfindungsgemäßen Verfahrens ist eine sehr präzise Fertigung der Bohrungsenden, die für die Sperrkugeln unpassierbare Verengungen darstellen, möglich. Es kann ein grundsätzlich beliebiger Übergriff und damit eine verbesserte Festigkeit der Verengungen eingestellt werden. Die maximale Ausgreifhöhe einer Sperrkugel aus einer Verengung heraus kann genau vorgegebene werden. Weiterhin kann die Verengung ohne Schwächungen mit gleichmäßiger Dicke, insbesondere mit umlaufendem Übergriff, gefertigt werden. Das Weiten der Querbohrung ist vom Durchmesser des Hülsenbauteils unabhängig, wodurch teure Feinbearbeitungsverfahren überflüssig sind.

### Bezugszeichenliste

- 1: Kugelsperrbolzen
- 2: Hülsenbauteil
- 3: Führungsaufnahme
- 4: Stößel
- 5: Tannenbaumverzahnung
- 6: Griffteil
- 7: dünner Abschnitt
- 8: Endabschnitt
- 9: Mittelabschnitt
- 10a, 10b: Verengung
- 11: Bohrung
- 12a, 12b: Sperrkugel
- 13: Tannenbaumverzahnung
- 14: Bedienknopf
- 15: Schulter
- 16: Anlegekante
- 17: Grund
- 18: Anlegekante
- 19: Feder
- 20a, 20b: Wand
- 21: innerer Teilabschnitt der Bohrung
- 22: Fräser
- 23: Fräskopf
- 24: Fräshalter
- 40: gekrümmter, sich anschließender Bereich der Bohrung
- 41: gerader verlaufender Abschnitt der Bohrung
- 50: Montage-Vorrichtung
- 51: Grundplatte
- 52: Halterung
- 53: Wechseleinsatz
- 54: Aufnahme
- 55: Griff
- 56: Spannbolzen
- 57: Außenseite
- 58: Vakuumanschluss
- 59: innerer Ringraum
- 60: Kanal
- 61: äußerer Ringraum
- 62: Montagebolzen
- 63: Feder
- 64: Montagebolzenhalterungs-Baugruppe
- 65: umlaufende Dichtung
- 66: umlaufende Dichtung
- 71: umlaufende Dichtung
- 72: umlaufende Dichtung
- 73: Unterkante
- 74: Anschlag
- 75: Fixierhülse
- 80: Montage-System
- 81: Vakuumpumpe
- 82: Vakuumpumpe
- 83: Pumpstation
- 84: weiterer Wechseleinsatz
- 85: Luftdruckmesseinrichtung
- 86: Auswerteeinheit
- 87: rotes Licht
- 88: grünes Licht
- 89: erster Schalter
- 90: zweiter Schalter
- AR: axiale Richtung
- BA: Bohrungsachse
- DAU: Durchmesser Aufnahme
- DKA: Durchmesser Kanal
- DMB: Durchmesser Montagebolzen
- DRB: Durchmesser Rohbohrung
- DSK: Durchmesser Sperrkugel
- DVE: Durchmesser Verengung
- DWB: Durchmesser geweitete Bohrung
- H: Höhe Überstand
- LMB: Länge Montagebolzen
- RAB: Krümmungsradius sich anschließender Bereich
- RSK: Radius Sperrkugel
- AR: axiale Richtung
- BA: Bohrungsachse
- DAU: Durchmesser Aufnahme
- DKA: Durchmesser Kanal
- DMB: Durchmesser Montagebolzen
- DRB: Durchmesser Rohbohrung
- DSK: Durchmesser Sperrkugel
- DVE: Durchmesser Verengung
- DWB: Durchmesser geweitete Bohrung
- H: Höhe Überstand
- LMB: Länge Montagebolzen
- RAB: Krümmungsradius sich anschließender Bereich
- RSK: Radius Sperrkugel

## Patentansprüche

1. Verfahren zur Fertigung eines Kugelsperrbolzens (1),
wobei der Kugelsperrbolzen (1) ein Hülsenbauteil (2) mit einer axialen Führungsaufnahme (3) umfasst, in welcher ein Stößel (4) verschieblich gelagert ist, und wobei das Hülsenbauteil (2) eine quer zur Führungsaufnahme (3) verlaufende Bohrung (11) aufweist, in der wenigstens eine Sperrkugel (12a, 12b) angeordnet ist, wobei die wenigstens eine Sperrkugel (12a, 12b) in einer verriegelten Stellung des Stößels (4) nach außen in Richtung einer Verengung (10a, 10b) am äußeren Ende der Bohrung (11) gedrückt ist, so dass die Sperrkugel (12a, 12b) aus der Verengung (10a, 10b) herausragt, und in einer entriegelten Stellung die wenigstens eine Sperrkugel (12a, 12b) in einen dünnen Abschnitt (7), insbesondere eine umlaufende Ausnehmung, am Stößel (4) zurückfallen kann, so dass die Sperrkugel (12a, 12b) nicht aus der Verengung (10a, 10b) herausragt,
wobei das Verfahren folgende Schritte aufweist:
a) ein Hülsenbauteil (2) wird mit einer quer zu seiner Führungsaufnahme (3) verlaufenden Bohrung (11) versehen, die zumindest bis zur Führungsaufnahme (3) reicht, wobei der Durchmesser (DRB) der Bohrung (11) kleiner ist als der Durchmesser (DSK) der wenigstens einen Sperrkugel (12a, 12b);
b) die Bohrung (11) wird in einem inneren Teilabschnitt (21) durch Materialabtrag auf einen Durchmesser (DWB) größer als der Durchmesser (DSK) der wenigstens einen Sperrkugel (12a, 12b) geweitet, wobei eine Verengung (10a, 10b) an wenigstens einem äußeren Ende der Bohrung (11) verbleibt;
c) die wenigstens eine Sperrkugel (12a, 12b) wird in die Bohrung (11) eingeführt, inbesondere durch die Führungsaufnahme (3), und durch Anlegen eines Unterdrucks an der wenigstens einen Verengung (10a, 10b) relativ zur Führungsaufnahme (3) wird die wenigstens eine Sperrkugel (12a, 12b) gegen die Verengung (10a, 10b) gezogen;
d) ein Stößel (4) wird in die Führungsaufnahme (3) eingeführt, während die wenigstens eine Sperrkugel (12a, 12b) durch den Unterdruck gegen die Verengung (10a, 10b) gezogen wird.

2. Verfahren nach Anspruch 1, **dadurch gekennzeichnet,**
**dass** in Schritt a) das Hülsenbauteil (2) mit einer durchgehenden Bohrung (11) versehen wird,
**dass** in Schritt b) jeweils eine Verengung (10a, 10b) an den beiden einander gegenüberliegenden, äußeren Enden der Bohrung (11) verbleibt,
**dass** in Schritt c) zwei Sperrkugeln (12a, 12b) in die Bohrung (11) eingeführt werden, und durch Anlegen des Unterdrucks an beiden Verengungen (10a, 10b) jeweils eine Sperrkugel (12a, 12b) gegen eine der Verengungen (10a, 10b) gezogen wird,
und **dass** in Schritt d) der Stößel (4) in die Führungsaufnahme (3) eingeführt wird, während die beiden Sperrkugeln (12a, 12b) durch den Unterdruck jeweils gegen eine der Verengungen (10a, 10b) gezogen werden.

3. Verfahren nach einem der vorhergehenden Ansprüche, **dadurch gekennzeichnet, dass** in Schritt b) der Materialabtrag durch Fräsen, insbesondere Zirkularfräsen, erfolgt.

4. Verfahren nach einem der vorhergehenden Ansprüche, **dadurch gekennzeichnet, dass** in Schritt b) der Materialabtrag so erfolgt, dass eine resultierende Verengung (10a, 10b) zur Sperrkugel (12a, 12b), wenn diese gegen die resultierende Verengung (10a, 10b) gedrückt wird, einen vollständig umlaufenden Kontakt ausbildet.

5. Verfahren nach einem der vorhergehenden Ansprüche, **dadurch gekennzeichnet, dass** in Schritt b) der Materialabtrag so erfolgt, dass die Bohrung (11) in einem sich an eine resultierende Verengung (10a, 10b) anschließenden Bereich (40) in einer Schnittebene entlang einer Bohrungsachse (BA) der Bohrung (11) gekrümmt verläuft, insbesondere mit einem einheitlichen Krümmungsradius (RAB) in dieser Schnittebene.

6. Verfahren nach Anspruch 5, **dadurch gekennzeichnet, dass** der sich an die Verengung (10a, 10b) anschließende Bereich (40) in der Schnittebene entlang der Bohrungsachse (BA) der Bohrung (11) einen Krümmungsradius (RAB) aufweist, der näherungsweise dem Krümmungsradius (RSK) der Sperrkugel (12a, 12b) entspricht, insbesondere wobei in dem sich anschließenden Bereich (40) der Krümmungsradius (RAB) maximal 40% kleiner und maximal 40% größer ist als der Krümmungsradius (RSK) der Sperrkugel (12a, 12b).

7. Verfahren nach einem der vorhergehenden Ansprüche, **dadurch gekennzeichnet, dass** in Schritt c) und d) der Unterdruck an der wenigstens einen Verengung (10a, 10b) relativ zur Führungsaufnahme (3) durch eine Pumpe (81, 82) erzeugt wird, die an der wenigstens einen Verengung (10a, 10b) saugt.

8. Verfahren nach einem der vorhergehenden Ansprüche, **dadurch gekennzeichnet, dass** am Ende von Schritt c) der korrekte Sitz der wenigstens einen Sperrkugel (12a, 12b) durch eine oder mehrere Luftdruckmessungen überprüft wird.

9. Verfahren nach einem der vorhergehenden Ansprüche, **dadurch gekennzeichnet,**
**dass** während oder nach Schritt d) der Stößel (4) axial so positioniert wird, dass ein dünner Abschnitt (7), insbesondere eine umlaufende Ausnehmung, des Stößels (4) auf Höhe der Bohrung (11) des Hülsenbauteils (2) angeordnet ist, so dass die wenigstens eine Sperrkugel (12a, 12b) in den dünnen Abschnitt (7) zurückfallen kann, und dass anschließend zeitweilig eine Fixierhülse (75) über das Hülsenbauteil (2) geschoben wird, welche die wenigstens eine Sperrkugel (12a, 12b) nach innen in die Bohrung (11) drückt, so dass die wenigstens eine Sperrkugel (12a, 12b) nicht aus der Verengung (10a, 10b) herausragt.

10. Verfahren nach einem der vorhergehenden Ansprüche, **dadurch gekennzeichnet, dass** nach Schritt d) das Hülsenbauteil (2) mit einem Griffteil (6) versehen wird und eine Feder (19) zwischen dem Stößel (4) oder einem am Stößel (4) montierten Betätigungsknopf (14) einerseits und dem Hülsenbauteil (2) oder dem auf dem Hülsenbauteil (2) montierten Griffteil (6) andererseits angeordnet wird.

11. Montage-Vorrichtung (50) zur Durchführung der Schritte c) und d) eines Verfahrens nach einem der vorhergehenden Ansprüche, umfassend
- eine Grundplatte (51) mit einer Halterung (52) für einen Wechseleinsatz (53), und
- einen Wechseleinsatz (53) mit einer Aufnahme (54) für ein Hülsenbauteil (2), wobei der Wechseleinsatz (53) in der Halterung (52) austauschbar gehalten ist, sowie einem axial verschiebbaren Montagebolzen (62) zum Einfahren in die Führungsaufnahme (3) eines in der Aufnahme (54) gehaltenen Hülsenbauteils (2),
wobei die Grundplatte (51) an einer Außenseite (57) einen Vakuumanschluss (58) aufweist, der mit einem inneren Ringraum (59) des Wechseleinsatzes (53) verbunden ist, wobei mit dem inneren Ringraum (59) ein in der Aufnahme (54) angeordnetes Hülsenbauteil (2) zumindest axial auf Höhe der Bohrung (11) des Hülsenbauteils (2) umgriffen wird.

12. Vorrichtung (50) nach Anspruch 11, **dadurch gekennzeichnet, dass** der Wechseleinsatz (53) zumindest zwei umlaufende Dichtungen (71, 72) an der Aufnahme (54) axial beiderseits des inneren Ringsraums (59) aufweist.

13. Vorrichtung (50) nach Anspruch 11 oder 12, **dadurch gekennzeichnet,**
**dass** zwischen der Grundplatte (51) und dem Wechseleinsatz (53) ein äußerer Ringraum (61) ausgebildet ist,
wobei der äußere Ringraum (61) durch die Grundplatte (51) hindurch mit dem Vakuumanschluss (58) verbunden ist,
und wobei der äußere Ringraum (61) durch den Wechseleinsatz (53) hindurch mit dem inneren Ringraum (59) verbunden ist, insbesondere mittels mehrerer Kanäle (60) jeweils mit einem Durchmesser (DKA) kleiner als der Durchmesser (DSK) der wenigstens einen Sperrkugel (12a, 12b),
und **dass** die Grundplatte (51) und/oder der Wechseleinsatz (53) zumindest zwei umlaufende Dichtungen (65, 66) axial beiderseits des äußeren Ringraums (61) aufweisen.

14. Vorrichtung (50) nach einem der Ansprüche 11 bis 13, **dadurch gekennzeichnet, dass** die Vorrichtung (50) weiterhin eine Pumpstation (83) umfasst, aufweisend wenigstens eine Vakuumpumpe (81, 82) zum Besaugen des Vakuumanschlusses (58),
insbesondere wobei die Vakuumpumpe (81, 82) eine Venturi-Düsen-Pumpe ist.

15. Vorrichtung (50) nach Anspruch 14, **dadurch gekennzeichnet, dass** die Pumpstation (83) weiterhin wenigstens eine Luftdruckmesseinrichtung (85) umfasst, mit der der am Vakuumanschluss (58) erreichte Luftdruck messbar ist,
insbesondere wobei die Vorrichtung (50) eine Auswerteeinheit (86), bevorzugt umfassend eine Lichtsignalanzeige (87, 88), aufweist, mit der das Unterschreiten eines vorgegebenen Luftdrucks am Vakuumanschluss (58) signalisiert werden kann.

16. Vorrichtung (50) nach Anspruch 14 oder 15, **dadurch gekennzeichnet,**
**dass** die Pumpstation (83) wenigstens zwei Vakuumpumpen (81, 82) mit unterschiedlicher Pumpleistung umfasst, von denen jeweils eine zum Besaugen des Vakuumanschlusses (58) ausgewählt werden kann.

17. Vorrichtung nach (50) einem der Ansprüche 11 bis 16, **dadurch gekennzeichnet,**
**dass** der axial verschiebbare Montagebolzen (62) mit einer Feder (63) in eine Grundposition vorgespannt ist, wobei der Montagebolzen (62) in der Grundposition axial soweit in die Führungsaufnahme (3) eines in der Aufnahme (54) gehaltenen Hülsenbauteils (2) eingefahren ist, dass eine auf dem Montagebolzen (62) aufliegende Sperrkugel (12a, 12b) axial auf Höhe der Bohrung (11) des Hülsenbauteils (2) angeordnet ist.

18. Montage-System (80) zur Durchführung der Schritte c) und d) des Verfahrens nach einem der Ansprüche 1 bis 10, umfassend eine Montage-Vorrichtung (50) nach einem der Ansprüche 11 bis 17 sowie mindestens einen weiteren Wechseleinsatz (84),
wobei verschiedene Wechseleinsätze (53, 84) unterschiedlich große Aufnahmen (54) für Hülsenbauteile (2) aufweisen,
und die Montagebolzen (62) der verschiedenen Wechseleinsätze (53, 84) unterschiedliche Längen (LMB) und/oder unterschiedliche Durchmesser (DMB) aufweisen.

## Claims

1. Method of producing a ball lock pin (1), wherein the ball lock pin (1) comprises a sleeve component (2) with an axial guide retainer (3) in which a plunger (4) is displaceably supported, and wherein the sleeve component (2) has a bore (11) which extends transversely with respect to the guide retainer (3) and in which at least one retaining ball (12a, 12b) is arranged, wherein the at least one retaining ball (12a, 12b) is pressed in an outward direction towards a narrowing (10a, 10b) at the outer end of the bore (11) in a locked position of the plunger (4) such that the retaining ball (12a, 12b) projects beyond the narrowing (10a, 10b), and in an unlocked position, the at least one retaining ball (12a, 12b) can fall back into a thin portion (7), in particular a circumferential recess, on the plunger (4) such that the retaining ball (12a, 12b) does not project beyond the narrowing (10a, 10b),
the method comprising the following steps:
a) a sleeve component (2) is provided with a bore (11) which extends in a transverse direction with respect to its guide retainer (3) and extends at least to the guide retainer (3), wherein the diameter (DRB) of the bore (11) is smaller than the diameter (DSK) of the at least one retaining ball (12a, 12b);
b) by removing material, the bore (11) is widened in an inner section (21) to a diameter (DWB) which is larger than the diameter (DSK) of the at least one retaining ball (12a, 12b), wherein a narrowing (10a, 10b) remains at least at one outer end of the bore (11);
c) the at least one retaining ball (12a, 12b) is inserted into the bore (11), in particular through the guide retainer (3), and through application of an underpressure to the at least one narrowing (10a, 10b) relative to the guide retainer (3) the at least one retaining ball (12a, 12b) is drawn against the narrowing (10a, 10b);
d) a plunger (4) is inserted into the guide retainer (3) while the at least one retaining ball (12a, 12b) is drawn by the underpressure against the narrowing (10a, 10b).

2. Method according to claim 1, **characterized in that** in step a) the sleeve component (2) is provided with a continuous bore (11), that in step b) one narrowing (10a, 10b) remains at each of the two opposite outer ends of the bore (11),
that in step c) two retaining balls (12a, 12b) are inserted into the bore (11) and one retaining ball (12a, 12b) is drawn against each narrowing (10a, 10b) through application of underpressure to both narrowings (10a, 10b),
and that in step d) the plunger (4) is inserted into the guide retainer (3) while each of the two retaining balls (12a, 12b) is drawn against one of the narrowings (10a, 10b) by the underpressure.

3. Method according to any one of the preceding claims, **characterized in that** in step b) the material is removed by milling, in particular circular milling.

4. Method according to any one of the preceding claims, **characterized in that** in step b) the material is removed in such a manner that a resulting narrowing (10a, 10b) towards the retaining ball (12a, 12b) forms a complete circumferential contact when the retaining ball is pressed against the resulting narrowing (10a, 10b).

5. Method according to any one of the preceding claims, **characterized in that** in step b) material is removed in such a manner that the bore (11) extends in a curved shape in an area (40) adjoining a resulting narrowing (10a, 10b) in a sectional plane along a bore axis (BA) of the bore (11), in particular, with a uniform radius of curvature (RAB) in this sectional plane.

6. Method according to claim 5, **characterized in that** the area (40) adjoining the narrowing (10a, 10b) has a radius of curvature (RAB) in the sectional plane along the bore axis (BA) of the bore (11) which approximately corresponds to the radius of curvature (RSK) of the retaining ball (12a, 12b), in particular, wherein in the adjoining area (40) the radius of curvature (RAB) is maximally 40% smaller and maximally 40% larger than the radius of curvature (RSK) of the retaining ball (12a, 12b).

7. Method according to any one of the preceding claims, **characterized in that** in steps c) and d) the underpressure at the at least one narrowing (10a, 10b) relative to the guide retainer (3) is generated by a pump (81, 82) which sucks on the at least one narrowing (10a, 10b).

8. Method according to any one of the preceding claims, **characterized in that** at the end of step c) the correct seat of the at least one retaining ball (12a, 12b) is examined by one or more air pressure measurements.

9. Method according to any one of the preceding claims, **characterized in that**
during or after step d), the plunger (4) is axially positioned in such a manner that a thin portion (7), in particular a circumferential recess, of the plunger (4) is arranged at the height of the bore (11) of the sleeve component (2) such that the at least one retaining ball (12a, 12b) can fall back into the thin portion (7), and that subsequently a fixing sleeve (75) is temporarily pushed over the sleeve component (2) which forces the at least one retaining ball (12a, 12b) in an inward direction into the bore (11) such that the at least one retaining ball (12a, 12b) does not project beyond the narrowing (10a, 10b).

10. Method according to any one of the preceding claims, **characterized in that** after step d) the sleeve component (2) is provided with a handle (6), and a spring (19) is arranged between the plunger (4) or a control button (14) mounted to the plunger (4) on the one hand and the sleeve component (2) or the handle (6) mounted to the sleeve component (2) on the other hand.

11. Mounting device (50) for performing steps c) and d) of a method according to any one of the preceding claims, comprising
- a base plate (51) with a holder (52) for an interchangeable insert (53), and
- an interchangeable insert (53) with a retainer (54) for a sleeve component (2), wherein the interchangeable insert (53) is held in the holder (52) such that it can be exchanged, and an axially displaceable mounting bolt (62) for insertion into the guide retainer (3) of a sleeve component (2) held in the retainer (54),
wherein the base plate (51) has a vacuum connection (58) at an outer side (57) which is connected to an inner annular space (59) of the interchangeable insert (53), wherein the inner annular space (59) encompasses a sleeve component (2) arranged in the retainer (54) at least axially at the height of the bore (11) of the sleeve component (2).

12. Device (50) according to claim 11, **characterized in that** the interchangeable insert (53) comprises at least two circumferential seals (71, 72) on the retainer (54) axially on both sides of the inner annular space (59).

13. Device (50) according to claim 11 or 12, **characterized in that** an outer annular space (61) is formed between the base plate (51) and the interchangeable insert (53),
wherein the outer annular space (61) is connected through the base plate (51) to the vacuum connection (58),
and wherein the outer annular space (61) is connected through the interchangeable insert (53) to the inner annular space (59), in particular by means of a plurality of channels (60) each having a diameter (DKA) which is smaller than the diameter (DSK) of the at least one retaining ball (12a, 12b),
and that the base plate (51) and/or the interchangeable insert (53) has/have at least two circumferential seals (65, 66) axially on both sides of the outer annular space (61).

14. Device (50) according to any one of the claims 11 through 13, **characterized in that** the device (50) furthermore has a pump station (83) comprising at least one vacuum pump (81, 82) for sucking on the vacuum connection (58),
in particular wherein the vacuum pump (81, 82) is a Venturi nozzle pump.

15. Device (50) according to claim 14, **characterized in that** the pump station (83) furthermore has at least one air pressure measuring device (85) by means of which the air pressure reached at the vacuum connection (58) can be measured,
in particular wherein the device (50) comprises an evaluation unit (86), preferably comprising a light signal display (87, 88), which can signal when the air pressure at the vacuum connection (58) has fallen below a predetermined level.

16. Device (50) according to claim 14 or 15, **characterized in that** the pump station (83) comprises at least two vacuum pumps (81, 82) with different pumping capacities, one of which can be selected for sucking on the vacuum connection (58).

17. Device (50) according to any one of the claims 11 through 16, **characterized in that** the axially displaceable mounting bolt (62) is pretensioned into a base position by means of a spring (63), wherein in the base position the mounting bolt (62) is retracted in an axial direction into the guide retainer (3) of a sleeve component (2) held in the retainer (54) to such an extent that a retaining ball (12a, 12b) supported on the mounting bolt (62) is axially arranged at the height of the bore (11) of the sleeve component (2).

18. Mounting system (80) for performing steps c) and d) of the method according to any one of the claims 1 through 10, comprising a mounting device (50) according to any one of the claims 11 through 17 and at last one further interchangeable insert (84), wherein different interchangeable inserts (53, 84) have retainers (54) of different sizes for sleeve components (2), and the mounting bolts (62) of the various interchangeable inserts (53, 84) have different lengths (LMB) and/or different diameters (DMB).

## Revendications

1. Procédé de fabrication d'un boulon (1) de blocage à billes, sachant que le boulon (1) de blocage à billes comprend un élément (2) formant manchon avec un logement de guidage axial (3) dans lequel un poussoir (4) est monté mobile en translation, et sachant que l'élément (2) formant manchon présente un perçage (11) s'étendant transversalement au logement de guidage (3) et dans lequel est disposée au moins une bille de blocage (12a, 12b), sachant que la bille de blocage au moins unique (12a, 12b), dans une position verrouillée du poussoir (4), est poussée vers l'extérieur en direction d'un rétrécissement (10a, 10b) à l'extrémité extérieur du perçage (11), de sorte que la bille de blocage (12a, 12b) déborde du rétrécissement (10a, 10b), et que dans une position déverrouillée, la bille de blocage au moins unique (12a, 12b) peut retomber dans une partie mince (7), en particulier un évidement entourant, sur le poussoir (4), de sorte que la bille de blocage (12a, 12b) ne déborde pas du rétrécissement (10a, 10b), sachant que le procédé présente les étapes suivantes:
a) un élément (2) formant manchon est pourvu d'un perçage (11) s'étendant transversalement à son logement de guidage (3) et atteignant au moins le logement de guidage (3), sachant que le diamètre (DRB) du perçage (11) est inférieur au diamètre (DSK) de la bille de blocage au moins unique (12a, 12b) ;
b) le perçage (11) est, dans une région partielle intérieure (21), élargi par enlèvement de matière à un diamètre (DWB) supérieur au diamètre (DSK) de la bille de blocage au moins unique (12a, 12b), sachant qu'un rétrécissement (10a, 10b) reste présent à au moins une extrémité extérieure du perçage (11) ;
c) la bille de blocage au moins unique (12a, 12b) est introduite dans le perçage (11), en particulier par le logement de guidage (3), et par application d'une dépression au niveau du rétrécissement au moins unique (10a, 10b) par rapport au logement de guidage (3), la bille de blocage au moins unique (12a, 12b) est tirée contre le rétrécissement (10a, 10b);
d) un poussoir (4) est introduit dans le logement de guidage (3) tandis que la bille de blocage au moins unique (12a, 12b) est tirée contre le rétrécissement (10a, 10b) par la dépression.

2. Procédé selon la revendication 1, **caractérisé en ce que**
à l'étape a), l'élément (2) formant manchon est pourvu d'un perçage traversant (11),
à l'étape b), un rétrécissement respectif (10a, 10b) reste présent à chacune des deux extrémités extérieures en vis-à-vis du perçage (11),
à l'étape c), deux billes de blocage (12a, 12b) sont introduites dans le perçage (11), et par application de la dépression au niveau des deux rétrécissements (10a, 10b), chaque bille de blocage (12a, 12b) est tirée contre un des rétrécissements (10a, 10b),
et à l'étape d), le poussoir (4) est introduit dans le logement de guidage (3) tandis que chacune des deux billes de blocage (12a, 12b) est tirée contre un des rétrécissements (10a, 10b) par la dépression.

3. Procédé selon l'une des revendications précédentes, **caractérisé en ce que**, à l'étape b), l'enlèvement de matière s'effectue par fraisage, en particulier par fraisage circulaire.

4. Procédé selon l'une des revendications précédentes, **caractérisé en ce que**, à l'étape b), l'enlèvement de matière s'effectue de telle sorte qu'un rétrécissement résultant (10a, 10b) forme un contact tout autour avec la bille de blocage (12a, 12b) lorsque celle-ci est poussée contre le rétrécissement résultant (10a, 10b).

5. Procédé selon l'une des revendications précédentes, **caractérisé en ce que**, à l'étape b), l'enlèvement de matière s'effectue de telle sorte que le perçage (11), dans une région (40) faisant suite à un rétrécissement résultant (10a, 10b), s'étend de manière courbée dans un plan de coupe le long d'un axe de perçage (BA) du perçage (11), en particulier avec un rayon de courbure uniforme (RAB) dans ce plan de coupe.

6. Procédé selon la revendication 5, **caractérisé en ce que** la région (40) faisant suite au rétrécissement (10a, 10b) présente, dans le plan de coupe le long de l'axe de perçage (BA) du perçage (11), un rayon de courbure (RAB) qui correspond approximativement au rayon de courbure (RSK) de la bille de blocage (12a, 12b), sachant en particulier que, dans la région (40) faisant suite, le rayon de courbure (RAB) est au maximum 40% inférieur et au maximum 40% supérieur au rayon de courbure (RSK) de la bille de blocage (12a, 12b).

7. Procédé selon l'une des revendications précédentes, **caractérisé en ce que**, aux étapes c) et d), la dépression au niveau du rétrécissement au moins unique (10a, 10b) par rapport au logement de guidage (3) est produite par une pompe (81, 82) qui aspire au niveau du rétrécissement au moins unique (10a, 10b).

8. Procédé selon l'une des revendications précédentes, **caractérisé en ce que**, à la fin de l'étape c), l'assise correcte de la bille de blocage au moins unique (12a, 12b) est vérifiée par une ou plusieurs mesures de pression d'air.

9. Procédé selon l'une des revendications précédentes, **caractérisé en ce que**, pendant ou après l'étape d), le poussoir (4) est positionné axialement de telle sorte qu'une partie mince (7), en particulier un évidement entourant, du poussoir (4) est disposé à hauteur du perçage (11) de l'élément (2) formant manchon, de sorte que la bille de blocage au moins unique (12a, 12b) peut retomber dans la partie mince (7), et qu'ensuite, une douille (75) de fixation en position est enfilée sur l'élément (2) formant manchon et pousse la bille de blocage au moins unique (12a, 12b) vers l'intérieur dans le perçage (11), de sorte que la bille de blocage au moins unique (12a, 12b) ne déborde pas du rétrécissement (10a, 10b).

10. Procédé selon l'une des revendications précédentes, **caractérisé en ce que**, à la suite de l'étape d), l'élément (2) formant manchon est pourvu d'une poignée (6) et un ressort (19) est disposé entre le poussoir (4) ou un bouton d'actionnement (14) monté sur le poussoir (4) d'une part, et l'élément (2) formant manchon ou la poignée (6) montée sur l'élément (2) formant manchon d'autre part.

11. Dispositif (50) de montage pour la mise en oeuvre des étapes c) et d) d'un procédé selon l'une des revendications précédentes, comprenant
- un socle (51) avec un support (52) pour un insert interchangeable (53), et
- un insert interchangeable (53) avec un logement (54) pour un élément (2) formant manchon, sachant que l'insert interchangeable (53) est maintenu avec possibilité de remplacement dans le support (52), et avec un boulon de montage (62) mobile en translation axiale pour rentrer dans le logement de guidage (3) un élément (2) formant manchon maintenu dans le logement (54),
sachant que le socle (51) présente sur un côté extérieur (57) un branchement de vide (58) qui communique avec un espace annulaire intérieur (59) de l'insert interchangeable (53), sachant qu'un élément (2) formant manchon disposé dans le logement (54) est entouré par l'espace annulaire intérieur (59) au moins axialement à hauteur du perçage (11) de l'élément (2) formant manchon.

12. Dispositif (50) selon la revendication 11, **caractérisé en ce que** l'insert interchangeable (53) présente au moins deux joints d'étanchéité entourants (71, 72) au niveau du logement (54), axialement de part et d'autre de l'espace annulaire intérieur (59).

13. Dispositif (50) selon la revendication 11 ou 12, **caractérisé en ce qu'**un espace annulaire extérieur (61) est formé entre le socle (51) et l'insert interchangeable (53),
sachant que l'espace annulaire extérieur (61) communique avec le branchement de vide (58) à travers le socle (51),
et sachant que l'espace annulaire extérieur (61) communique avec l'espace annulaire intérieur (59) à travers l'insert interchangeable (53), en particulier au moyen de plusieurs canaux (60) ayant chacun un diamètre (DKA) inférieur au diamètre (DSK) de la bille de blocage au moins unique (12a, 12b),
et **en ce que** le socle (51) et/ou l'insert interchangeable (53) présentent au moins deux joints d'étanchéité entourants (65, 66) axialement de part et d'autre de l'espace annulaire extérieur (61).

14. Dispositif (50) selon l'une des revendications 11 à 13, **caractérisé en ce que** le dispositif (50) comprend en outre un poste de pompage (83), présentant au moins une pompe à vide (81, 82) pour l'aspiration du branchement de vide (58), sachant notamment que la pompe à vide (81, 82) est une pompe à venturi.

15. Dispositif (50) selon la revendication 14, **caractérisé en ce que** le poste de pompage (83) comprend en outre au moins un équipement (85) de mesure de pression d'air, qui permet de mesurer la pression d'air atteinte au branchement de vide (58),
sachant notamment que le dispositif (50) présente une unité d'interprétation (86), comprenant de préférence un affichage (87, 88) de signal lumineux, qui permet de signaler le passage sous une pression d'air prédéterminée au branchement de vide (58).

16. Dispositif (50) selon la revendication 14 ou 15, **caractérisé en ce que** le poste de pompage (83) comprend au moins deux pompes à vide (81, 82) ayant des puissances de pompage différentes, parmi lesquelles on peut en sélectionner chaque fois une pour l'aspiration du branchement de vide (58).

17. Dispositif (50) selon l'une des revendications 11 à 16, **caractérisé en ce que** le boulon de montage (62) mobile en translation axiale est précontraint par un ressort (63) dans une position de base, sachant que dans la position de base, le boulon de montage (62) est rentré axialement dans le logement de guidage (3) d'un élément (2) formant manchon maintenu dans le logement (54) dans une mesure telle qu'une bille de blocage (12a, 12b) reposant sur le boulon de montage (62) est disposée axialement à hauteur du perçage (11) de l'élément (2) formant manchon.

18. Système (80) de montage pour la mise en oeuvre des étapes c) et d) du procédé selon l'une des revendications 1 à 10, comprenant un dispositif (50) de montage selon l'une des revendications 11 à 17 ainsi qu'au moins un insert interchangeable supplémentaire (84),
sachant que des inserts interchangeables différents (53, 84) présentent des logements (54) de tailles différentes pour des éléments (2) formant manchon,
et que les boulons de montage (62) des différents inserts interchangeables (53, 84) présentent des longueurs différentes (LMB) et/ou des diamètres différents (DMB).
